# DEMANDE DE BREVET EUROPEEN

(11) **EP 1 772 297 A1**
(43) Date de publication de la demande: **11.04.2007**
(21) Numéro de dépôt: 06301017.7
(22) Date de dépôt: 05.10.2006
(51) Int. Cl.: B60G 21/05, B60G 9/04, B60B 35/02

(54) **Traverse de train arrière de véhicule automobile**

(30) Priorité: 06.10.2005 FR 0553036
(71) Demandeur: Peugeot Citroen Automobiles SA, 78140 Vélizy-Villacoublay (FR)
(72) Inventeur: Khayame, Omar, 75013 Paris (FR)

(57) **Abrégé**

L'invention concerne une traverse (1) de train arrière de véhicule, notamment de train arrière à traverse déformable d'un véhicule automobile, où la traverse (1) est formée de deux lames (10) distinctes et non parallèles. Selon l'invention, la traverse présente une section transversale en forme de V tronqué à la pointe, les deux lames (10) formant les branches du V.

## Description

La présente invention concerne une traverse de train arrière d'un véhicule automobile.

Elle concerne plus particulièrement une traverse de train arrière à traverse déformable d'un véhicule automobile à traction avant.

De tels trains arrière sont constitués de deux bras longitudinaux reliés entre eux par une traverse, dont le plan médian constitue le plan de symétrie dudit train arrière. L'une des extrémités des bras supporte l'axe des roues et l'autre extrémité est fixée à la caisse du véhicule au moyen d'une articulation élastique, destinée à filtrer en partie les vibrations en provenance des roues.

Le train arrière est destiné à assurer le lien mécanique entre les deux roues arrière du véhicule. Il présente différents comportements mécaniques selon que le véhicule est en pompage vertical ou qu'il subit des accélérations latérales, particulièrement en virage, c'est-à-dire en situation de roulis.

En situation de roulis, le mouvement du train arrière se décompose en un mouvement de rotation de chacun des demi trains arrière symétriques par rapport au plan médian, respectivement droite et gauche, autour d'une ligne virtuelle de torsion joignant l'articulation élastique, respectivement droite et gauche, et le centre de torsion de la traverse situé dans le plan médian du train. Les variations du plan de roue, et donc le comportement dynamique du véhicule, dépendent ainsi du positionnement de cette ligne virtuelle et donc du centre de torsion.

La position dans l'espace du centre de torsion est donc primordiale pour le comportement du train arrière en situation de roulis. Cette position dépend de deux données :
- le profil de la traverse, à savoir la forme de la section longitudinale de la traverse, imposant une position du centre de torsion par rapport à ladite traverse ; et
- la localisation de ladite traverse dans l'espace.

La localisation de la traverse dans l'espace doit répondre à de nombreuses contraintes d'encombrement, notamment vis-à-vis des autres éléments du véhicule tels que les longerons, le réservoir d'essence et le conduit d'échappement.

Un des paramètres essentiels pour maîtriser la position du centre de torsion est donc le profil de la traverse. Parmi les solutions techniques concernant les trains arrière à traverse déformable, il est connu d'employer des traverses déformables comportant un profilé qui, en section transversale, présente sensiblement la forme d'un U ou d'un V. Pour une section en forme de V, le centre de torsion est situé à la jonction des deux branches, correspondant à la base du profilé. Pour une section en forme de U, le centre de torsion est situé légèrement en dehors de la section, à l'extérieur de la courbure du U et dans le plan de symétrie de ladite section, assurant ainsi un léger découplage du positionnement de la traverse et du centre de torsion.

Cependant, ce type de traverse présente l'inconvénient d'avoir un centre de torsion relativement proche de la section et, pour atteindre une position plus éloignée dudit centre de torsion tout en respectant l'espace disponible, il est parfois nécessaire de cintrer la traverse. Ces traverses cintrées présentent l'inconvénient d'être moins rigides en cas de charge d'efforts latéraux sur le train arrière. Elles sont par ailleurs plus difficiles à réaliser.

La présente invention a notamment pour but de proposer une traverse déformable de train arrière d'un véhicule automobile, permettant de pallier tout ou partie des inconvénients de l'art antérieur relevés ci-dessus.

La traverse déformable de train arrière selon l'invention comporte notamment un profilé conformé pour s'affranchir de la localisation de la traverse dans le positionnement du centre de torsion.

A cet effet, elle propose une traverse de train arrière de véhicule, notamment de train arrière à traverse déformable d'un véhicule automobile, où la traverse comprend deux lames inclinées l'une vers l'autre et disjointes sur au moins une partie de leur longueur.

Ainsi, le positionnement du centre de torsion de la traverse 1 pourra être contrôler en jouant sur les paramètres suivants :
- la forme des lames ;
- l'écart entre les deux lame ;
- l'orientation des lames l'une par rapport à l'autre, défini par l'angle d'inclinaison entre les deux lames ; et
- la position des lames dans l'espace, par exemple définit par un angle formé par une des deux lames vis-à-vis d'une direction fixe comme la direction longitudinale du véhicule.

L'invention concerne également une traverse qui présente une section transversale en forme de V tronqué ou non à la pointe, les deux lames formant les branches du V.

Selon une caractéristique, la traverse comprend des moyens de jonction des deux lames sur une partie de la longueur des deux dites lames, lesdits moyens de jonction étant formés de au moins deux plaques distinctes reliant les deux lames l'une à l'autre, lesdites plaques étant disposées symétriquement par rapport au plan médian de la traverse.

Avantageusement, les lames comporte, à au moins l'un de leurs bords latéraux, au moins un moyen pour raidir la traverse ; ces moyens pour raidir la traverse pouvant être obtenus en repliant sur lui-même le bord latéral correspondant des lames (10).

Selon une autre caractéristique, les branches présentent une section transversale sensiblement droite.

Selon une autre caractéristique, les branches présentent une section transversale sensiblement convexe.

Selon une autre caractéristique, les branches présentent une section transversale sensiblement concave.

Dans une réalisation particulière, au moins l'une des deux lames est constituée de au moins deux branches qui sont liés à au moins l'un des deux barres latéraux de ladite lame.

L'invention concerne également un véhicule automobile comportant une traverse telle que décrite ci-dessus.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue en perspective d'un train arrière d'un véhicule automobile muni d'une traverse conforme à l'invention ;
- la figure 2 est une vue en perspective d'un train arrière d'un véhicule automobile muni d'une traverse selon une variante de l'invention ;
- la figure 3a est une section transversale d'une traverse selon un premier mode de réalisation, dans le plan Pj de la figure 2 ;
- la figure 4a est une section transversale de la traverse selon le premier mode de réalisation, dans le plan Pm de la figure 2 ;

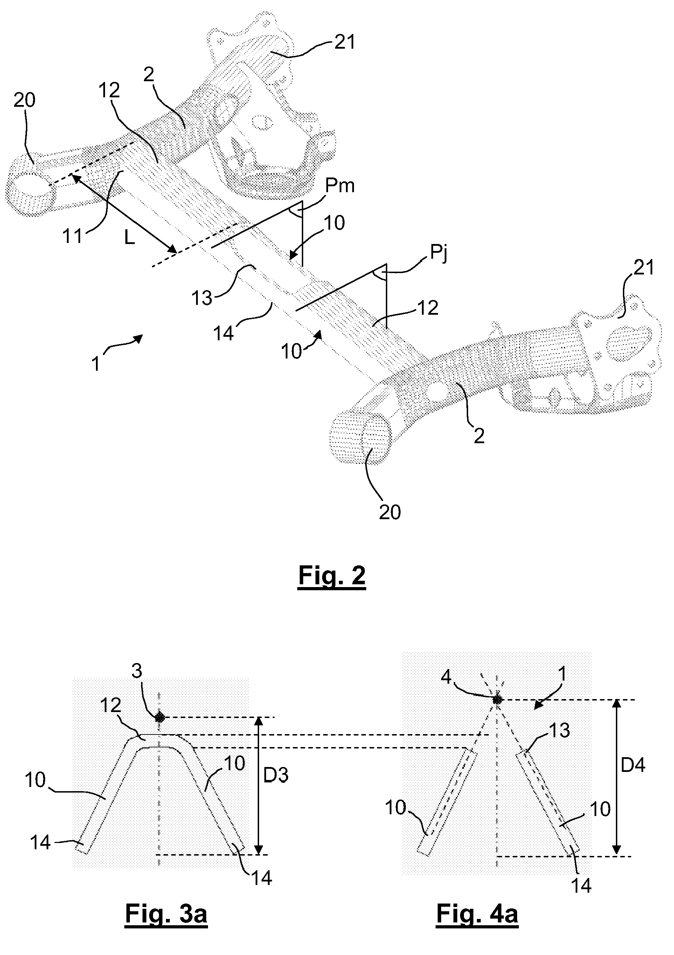

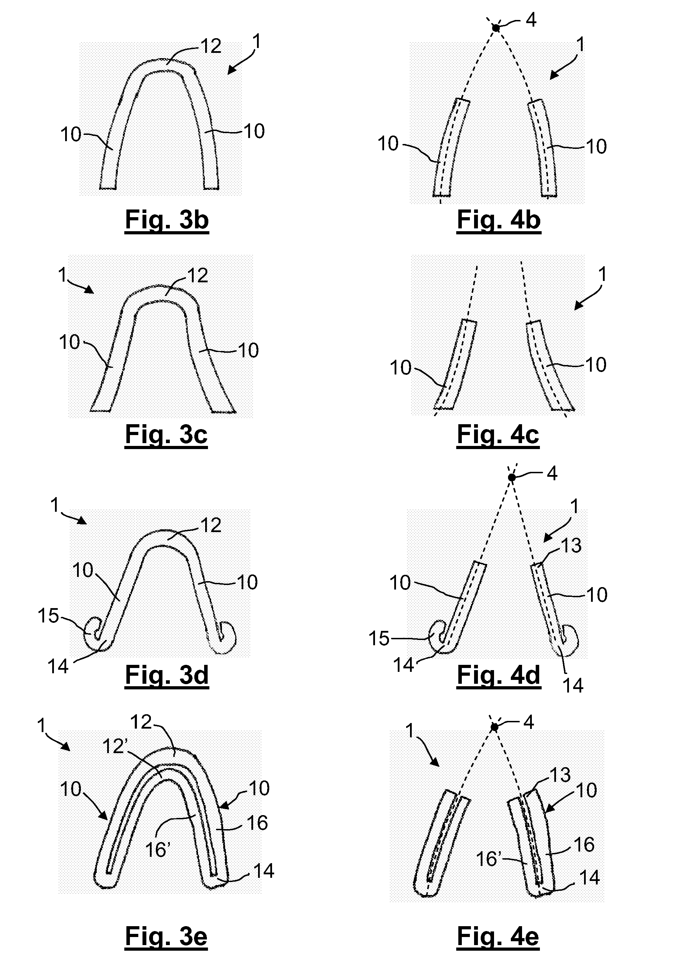

- la figure 3b est une section semblable à celle de la figure 3a d'une traverse selon un deuxième mode de réalisation ;
- la figure 4b est une section semblable à celle de la figure 4a de la traverse selon le deuxième mode de réalisation ;
- la figure 3c est une section semblable à celle de la figure 3a d'une traverse selon un troisième mode de réalisation ;
- la figure 4c est une section semblable à celle de la figure 4a de la traverse selon le troisième mode de réalisation ;
- la figure 3d est une section semblable à celle de la figure 3a d'une traverse selon un quatrième mode de réalisation ;
- la figure 4d est une section semblable à celle de la figure 4a de la traverse selon le quatrième mode de réalisation ;
- la figure 3e est une section semblable à celle de la figure 3a d'une traverse selon un cinquième mode de réalisation ; et
- la figure 4e est une section semblable à celle de la figure 4a de la traverse selon le cinquième mode de réalisation.

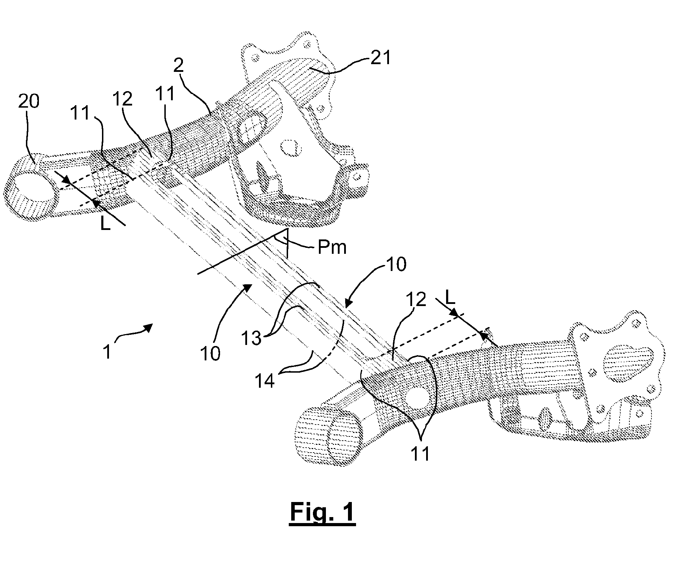

Sur les figures 3a à 4e, l'échelle n'est pas respectée par rapport aux figures 1 et 2.

Dans la description qui va suivre, des chiffres de référence identique désignent des pièces identiques ou ayant des fonctions similaires.

La figure 1 représente un train arrière de véhicule automobile qui comporte notamment une traverse désignée dans son ensemble par la référence 1, s'étendant entre deux bras longitudinaux 2, sensiblement parallèles à la direction longitudinale du véhicule.

Les bras longitudinaux 2 sont reliés, à l'une de leurs extrémités 20, à la caisse du véhicule par une articulation élastique du type connu et non représentée.

Les bras 2 sont destinés à supporter, à leurs autres extrémités 21 respectives, des organes de liaison, non représentés, avec leurs roues correspondantes. Chaque extrémité 21 des bras 2 est également destinée à être reliée à la caisse du véhicule par l'intermédiaire d'un amortisseur non représenté. La disposition de ces éléments le long des bras 2 est donnée à titre non limitatif.

La traverse 1 est formée de deux lames 10 distinctes et inclinées l'une vers l'autre, s'étendant en vis-à-vis entre les deux bras longitudinaux 2 ; lesdites lames 10 présentant chacune deux extrémités 11 opposées fixées de manière rigide aux bras 2 correspondants. On entend par lame 10 une bande de matière continue et de faible épaisseur. Dans l'exemple de réalisation représenté à la figure 1, les extrémités 11 sont soudées sur les bras 2 associés, avec par exemple l'adjonction d'un moyen de renfort non représenté pour assurer une résistance optimale de la liaison.

Selon la configuration du train arrière du véhicule, la position de la traverse 1 est plus ou moins rapprochée des extrémités 20 des bras 2. Cette position est fonction de l'architecture globale de la structure de soubassement du véhicule, en particulier en fonction de l'emplacement des longerons, de la roue de secours, du réservoir de carburant et du conduit d'échappement non représentés.

Selon l'invention, les deux lames 10 sont disjointes sur au moins une partie de leur longueur.

De la sorte, les deux lames 10 peuvent être disjointes sur la totalité de leur longueur. Dans ce cas, les deux lames 10 ne sont reliées que à leurs deux extrémités opposées 10 par l'intermédiaire des deux bras longitudinaux 2 ; aucun autre élément n'assurant la jonction des deux dites lames 11 entre les deux bras longitudinaux 2. De la sorte, le centre de torsion de la traverse 1 est positionné sensiblement au point fictif de convergence des lames 10 dans le plan médian Pm de la traverse 1. On entend par plan médian Pm de la traverse 1, le plan de symétrie de la traverse 1 normal à ladite traverse 1 ; il correspond au plan médian du train.

Les deux lames 10 sont avantageusement symétriques par rapport à un plan normal au plan médian Pm. De plus, chaque lame 10 présente deux bords latéraux 13, 14, s'étendant entre les deux bras 2 ; les premier bords latéraux 13 des lames 10 étant plus proches l'un de l'autre que les deuxième bords latéraux 14.

Afin de répondre aux contraintes de raideur en torsion et de raideur en compression, la traverse 1 comprend en outre des moyens de jonction 12 des deux lames 10 sur une partie de la longueur des deux dites lames 10 ; les moyens de jonction 12 reliant les premier bords latéraux 13 des deux lames 10. Dans ce cas, les deux lames 10 sont disjointes sur seulement une partie de leur longueur.

Dans ce mode de réalisation représenté en figure 1, les moyens de jonction 12 sont formés de deux plaques distinctes, de forme par exemple plane ou concave, reliant les deux lames 10 l'une à l'autre ; lesdites plaques de jonction 12 étant disposées symétriquement par rapport au plan médian Pm de la traverse 1. Chaque plaque de jonction 12 s'étend sur une portion de longueur L inférieure à la demi-longueur totale de la traverse 1, correspondant à la demi-longueur de chacune des deux lames 10, à partir des extrémités 11 correspondantes des lames 10.

Dans une variante de réalisation représenté en figure 2, les deux plaques de jonction 12 s'étendent chacune sur une longueur L supérieure par rapport au mode de réalisation représenté en figure 1, de sorte à augmenter la raideur de la traverse 1.

De manière générale, la traverse 1 présente une section en forme de V tronqué ou non à la pointe, les deux lames 10 formant les branches du V. Ainsi, sur les portions de longueur où les deux lames sont disjointes (par exemple dans le plan médian Pm de la figure 1 ou 2), la traverse 1 présente une section en forme de V tronqué à la pointe. Par contre, sur les portions de longueur où les deux lames sont jointes par les moyens de jonction 12 (par exemple dans le plan Pj de la figure 2 défini plus loin), la traverse 1 présente une section en forme de V ; la pointe du V étant formée des moyens de jonction 12 et étant avantageusement bombée.

Selon un premier mode de réalisation illustré sur la figure 4a, Les deux lames 10 présentent chacune une section transversale droite (autrement dit rectiligne) de sorte à former les branches droites, non parallèles et non reliées entre elles du V tronqué à la pointe. Cette section, dite section médiane, présente un centre de torsion 4 situé à une distance D4 des deuxièmes bords latéraux 14 des lames 10 et correspondant sensiblement au point fictif de convergence des lames 10 droites.

Dans un plan transversal Pj passant par l'une des deux plaques de jonction 12, ladite plaque de jonction 12, sensiblement de même épaisseur que les deux lames 10, relie les premier bords latéraux 13 des deux lames 10. Le centre de torsion d'une telle section, dite section de jonction, est situé au point 3, à une distance D3 des deuxièmes bords latéraux 14 des deux lames 10.

Dans un second mode de réalisation illustré aux figures 3b et 4b, les deux lames 10 présentent chacune une section transversale concave. Le centre de torsion 4 de la section médiane de la traverse 1 correspond au point fictif de convergence des lames 10 concaves.

Dans un troisième mode de réalisation illustré aux figures 3c et 4c, les deux lames 10 présentent chacune une section transversale convexe. Le centre de torsion (non représenté) de la section médiane de la traverse 1 correspond au point fictif de convergence des lames 10 convexes.

Dans un quatrième mode de réalisation illustré aux figures 3d et 4d, les deux lames 10 présentent des moyens 15 pour raidir la traverse 1, lesdits moyens 15 étant formés sur les deuxième bord latéraux 14 des lames 10. Pour chaque lame 10, les moyens 15 sont obtenus en repliant sur lui-même le deuxième bord latéral 14 vers l'extérieur de la traverse 1. Ces moyens 15 sont destinés généralement à répondre aux contraintes mécaniques de la traverse 1. Le centre de torsion 4 est sensiblement disposé au point fictif de convergence des lames 10.

Dans un cinquième mode de réalisation illustré aux figures 3e et 4e, chaque lame 10 est constituée de deux branches 16, 16' qui se rejoignent sur le deuxième bord latéral 14. Pour ce mode de réalisation, la traverse 1 est par exemple obtenue par une première étape d'emboutissage d'un tube creux dans le sens de la longueur. On obtient ainsi une section emboutie représenté en figure 3e qui a sensiblement la forme d'un V définissant deux lames 10, constituées chacune des deux branches 16 et 16', et une base commune, constituée de deux bases 12 et 12' associées aux branches 16 et 16' correspondantes. La base commune 12, 12' forme ainsi les moyens de jonction des deux lames 10.

Avec une deuxième de découpe d'une ouverture sur tout ou partie de la longueur de la traverse 1, on obtient une traverse selon l'invention. Cette deuxième étape est valable quelque soit la section transversale de la traverse 1. Le centre de torsion 4 est sensiblement au point fictif de convergence des lames 10.

Dans les cinq modes de réalisation de section transversale décrits ci-dessus, on note que le positionnement du centre de torsion 4 de la section médiane dépend de :
- la forme des lames 10 ;
- l'écart entre les deux lame 10 ;
- l'orientation des lames 10 l'une par rapport à l'autre, défini par l'angle d'inclinaison entre les deux lames 10 ; et
- la position des lames 10 dans l'espace, par exemple définit par un angle formé par une des deux lames 10 vis-à-vis d'une direction fixe comme la direction longitudinale du véhicule.

En faisant varier ces paramètres, il est possible de positionner librement le centre de torsion 4 dans l'espace. En particulier, on peut disposer le centre de torsion 4 d'une section médiane à une distance D4 des deuxième bords latéraux 14 supérieure à la distance D3 du centre de torsion 3 d'une section de jonction.

La traverse 1 est ainsi formée, selon l'invention, d'un profilé 11 évolutif avec différentes formes de section transversale comprenant :
- au moins une section de jonction permettant de répondre aux contraintes de raideur en torsion et de raideur en compression ; et
- au moins une section médiane permettant de positionner le centre de torsion de la traverse 1 sans avoir à déplacer ladite traverse 1.

Bien entendu, l'exemple de mise en oeuvre évoqué ci-dessus ne présente aucun caractère limitatif et d'autres détails et améliorations peuvent être apportés à la traverse selon l'invention, sans pour autant sortir du cadre de l'invention où d'autres formes de section transversale peuvent être réalisées.

## Revendications

1. Traverse (1) de train arrière de véhicule, notamment de train arrière à traverse déformable d'un véhicule automobile, **caractérisé en ce que** la traverse (1) comprend deux lames (10) inclinées l'une vers l'autre et disjointes sur au moins une partie de leur longueur.

2. Traverse (1) selon la revendication 1, **caractérisée en ce qu'**elle présente une section transversale en forme de V tronqué ou non à la pointe, les deux lames (10) formant les branches du V.

3. Traverse (1) selon l'une quelconque des revendications 1 et 2, **caractérisé en ce qu'**elle comprend des moyens de jonction des deux lames (10) sur une partie de la longueur des deux dites lames (10), lesdits moyens de jonction (12) étant formés de au moins deux plaques distinctes reliant les deux lames (10) l'une à l'autre, lesdites plaques (12) étant disposées symétriquement par rapport au plan médian (Pm) de la traverse (1).

4. Traverse (1) selon l'une quelconque des revendications 1 à 3, **caractérisée en ce que** les lames (10) comporte, à au moins l'un de leurs bords latéraux (13, 14), au moins un moyen (15) pour raidir la traverse (1).

5. Traverse (1) selon la revendication 4, **caractérisée en ce que** les moyens (15) pour raidir la traverse (1) sont obtenus en repliant sur lui-même le bord latéral (14) correspondant des lames (10).

6. Traverse (1) selon l'une quelconque des revendications précédentes, **caractérisée en ce que** les lames (10) présentent une section transversale sensiblement droite.

7. Traverse (1) selon l'une quelconque des revendications 1 à 5, **caractérisée en ce que** les lames (10) présentent une section transversale sensiblement convexes.

8. Traverse (1) selon l'une quelconque des revendications 1 à 5, **caractérisée en ce que** les lames (40) présentent une section transversale sensiblement concave.

9. Traverse (1) selon l'une quelconque des revendications précédentes, **caractérisée en ce que** au moins l'une des deux lames (10) est constituée de au moins deux branches (16, 16') qui sont liés à au moins l'un des deux bords latéraux (13, 14) de ladite lame (10).

10. Véhicule automobile comportant une traverse (1) selon l'une quelconque des revendications précédentes.
